(19) **Europäisches Patentamt**
**European Patent Office**
**Office européen des brevets**

(11) **EP 4 129 473 A1**

(12) **EUROPEAN PATENT APPLICATION**
published in accordance with Art. 153(4) EPC

(43) Date of publication:
**08.02.2023 Bulletin 2023/06**

(21) Application number: **21775178.3**

(22) Date of filing: **03.03.2021**

(51) International Patent Classification (IPC):
**B01J 23/83** (1995.01)   **B01J 23/10** (1974.07)
**B01J 23/745** (1995.01)   **B01J 23/78** (1974.07)
**C01B 32/40** (2017.01)   **C01F 17/32** (2020.01)
**C01G 49/00** (1968.09)

(52) Cooperative Patent Classification (CPC):
**B01J 23/10; B01J 23/745; B01J 23/78;**
**B01J 23/83; C01B 32/40; C01F 17/32;**
**C01G 49/00;** Y02P 20/141

(86) International application number:
**PCT/JP2021/008259**

(87) International publication number:
**WO 2021/192872 (30.09.2021 Gazette 2021/39)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **25.03.2020 JP 2020054285**

(71) Applicant: SEKISUI CHEMICAL CO., LTD.
**Osaka-shi**
**Osaka**
**530-8565 (JP)**

(72) Inventors:
• **MUKHERJEE Fiona**
  **Tsukuba-shi, Ibaraki 300-4292 (JP)**
• **SHINMEI Kenichi**
  **Tsukuba-shi, Ibaraki 300-4292 (JP)**
• **YAGIHASHI Noritoshi**
  **Tsukuba-shi, Ibaraki 300-4292 (JP)**
• **TAKIZAWA Koji**
  **Tsukuba-shi, Ibaraki 300-4292 (JP)**

(74) Representative: **Ter Meer Steinmeister & Partner**
**Patentanwälte mbB**
**Nymphenburger Straße 4**
**80335 München (DE)**

(54) **REDUCING AGENT, AND GAS PRODUCTION METHOD**

(57)     [Object] To provide a reducing agent that has a high conversion efficiency of carbon dioxide to carbon monoxide and can be used, for example, in a chemical looping method, and a method for producing a gas using such a reducing agent.

[Resolution Means] A reducing agent of the present invention is a reducing agent for use in production of a product gas containing carbon monoxide, the reducing agent being brought into contact with a raw material gas containing carbon dioxide to reduce the carbon dioxide to produce the product gas, and is characterized by containing: an oxygen carrier having oxygen ionic conductivity, and a basic oxide supported on the oxygen carrier. In addition, the basic oxide preferably contains at least one selected from the group consisting of lithium (Li), sodium (Na), potassium (K), magnesium (Mg), manganese (Mn), cobalt (Co), strontium (Sr), and rubidium (Rb).

**Description**

TECHNICAL FIELD

The present invention relates to a reducing agent and a method for producing a gas, and more specifically relates to a reducing agent that can be used, for example, in a chemical looping method, and a method for producing a gas using such a reducing agent.

BACKGROUND ART

In recent years, carbon dioxide, a kind of greenhouse gas, continues to increase in concentration in the atmosphere. The increase in concentration of carbon dioxide in the atmosphere contributes to global warming. Thus, recovery of carbon dioxide released into the atmosphere is important, and furthermore, reuse of the recovered carbon dioxide by converting it to a valuable substance could achieve a carbon-recycling society.

A method for producing carbon monoxide from carbon dioxide known in the art includes a method using a reverse water-gas shift reaction. However, this reverse water-gas shift reaction known in the art has a problem in that the reaction products, which are carbon monoxide and water, coexist in the system, and thus the conversion efficiency of carbon dioxide to carbon monoxide is reduced due to the constraint of the chemical equilibrium.

Thus, to solve the above problem, conversion of carbon dioxide to carbon monoxide (carbon monoxide synthesis) is performed using a chemical looping method. The chemical looping method referred to here is a method in which the above reverse water-gas shift reaction is divided into two reactions, a reduction reaction by hydrogen and a formation reaction of carbon monoxide from carbon dioxide, and these reactions are mediated by a metal oxide ($MO_x$) (see the following formulas).

$$H_2 + MO_x \rightarrow H_2O + MO_{x-1}$$

$$CO_2 + MO_{x-1} \rightarrow CO + MO_x$$

In the above formula, $MO_{x-1}$ represents the metal oxide that is in a partially or totally reduced state.

In the chemical looping method, during each reaction, water and carbon monoxide, which are substrates of the reverse reaction, do not coexist, and thus this would provide a higher conversion efficiency of carbon dioxide to carbon monoxide than the chemical equilibrium of the reverse water-gas shift reaction.

The metal oxide widely used to mediate the reactions in this chemical looping method includes an oxygen carrier, such as a cerium oxide or an iron oxide, which has oxygen ionic conductivity.

In addition, Non-Patent Literature 1 describes that a mixed oxygen carrier of a nickel oxide and an iron oxide supported on a support, such as $Al_2O_3$, is used, a magnesium oxide, which is a basic oxide, is further supported, and this configuration can accelerate an oxygen migration rate of the mixed oxygen carrier.

CITATION LIST

Non-Patent Literature

Non-Patent Literature 1: ASC Omega 2018, 3, 4378-4383

SUMMARY OF INVENTION

Technical Problem

According to a review by the present inventors, however, the mixed oxygen carrier described in Non-Patent Literature 1 is not intended to be used in chemical loop reactions for the purpose of the conversion of carbon dioxide to carbon monoxide. Thus, this mixed oxygen carrier does not have sufficient reactivity in adsorbing carbon dioxide or interaction with a basic oxide and has a problem of low conversion efficiency if it is used in conversion of carbon dioxide to carbon monoxide.

The present invention has been made in view of such circumstances, and an object of the present invention is to provide a reducing agent that has a high conversion efficiency of carbon dioxide to carbon monoxide and can be used, for example, in a chemical looping method, and a method for producing a gas using such a reducing agent.

Solution to Problem

Such an object is achieved by the present invention described below.

(1) A reducing agent of the present invention is a reducing agent for use in production of a product gas containing carbon monoxide, the reducing agent being brought into contact with a raw material gas containing carbon dioxide to reduce the carbon dioxide to produce the product gas, and is characterized by containing:

an oxygen carrier having oxygen ionic conductivity, and
a basic oxide supported on the oxygen carrier.

(2) In the reducing agent of the present invention, an amount of the basic oxide is preferably 60 parts by mass or less per 100 parts by mass of the reducing agent.
(3) In the reducing agent of the present invention, the basic oxide preferably contains at least one selected from the group consisting of lithium (Li), sodium (Na), potassium (K), magnesium (Mg), manganese (Mn), cobalt (Co), strontium (Sr), and rubidium (Rb).
(4) In the reducing agent of the present invention, the oxygen carrier preferably contains at least one selected from the group consisting of vanadium (V), iron (Fe), titanium (Ti), molybdenum (Mo), yttrium (Y), chromium (Cr), lanthanum (La), nickel (Ni), copper (Cu), tungsten (W), niobium (Nb), and cerium (Ce).
(5) The reducing agent of the present invention preferably further contains a composite metal oxide represented by $Ce_{1-x}(M)_xO_y$, where M is a metal element with an ionic radius smaller than an ionic radius of Ce with an identical valence number and an identical coordination number, x represents a positive real number, and y represents a real number from 1 to 4, the composite metal oxide being supported by the oxygen carrier.
(6) In the reducing agent of the present invention, a difference between the ionic radius of Ce and the ionic radius of the metal element M is preferably greater than 0 pm and 47 pm or less when the valence number is 3 and the coordination number is 6, and greater than 0 pm and 24 pm or less when the valence number is 4 and the coordination number is 8.
(7) In the reducing agent of the present invention, the metal element M is preferably at least one selected from the group consisting of samarium (Sm), zirconium (Zr), and hafnium (Hf).
(8) The reducing agent of the present invention is preferably used in production of a product gas containing carbon monoxide, the reducing agent being brought into contact with a raw material gas containing carbon dioxide to reduce the carbon dioxide to produce the product gas.
(9) In the reducing agent of the present invention, the oxidized reducing agent is preferably reduced by being brought into contact with a reducing gas containing hydrogen.
(10) The reducing agent of the present invention is preferably used separately in reaction steps of a reduction reaction of carbon dioxide and a reduction reaction of the oxidized reducing agent.
(11) A method for producing a gas of the present invention is characterized by reducing carbon dioxide by bringing the reducing agent of the present invention into contact with a raw material gas containing the carbon dioxide, to produce a product gas containing carbon monoxide.

ADVANTAGEOUS EFFECTS OF INVENTION

According to the present invention, a product gas containing carbon monoxide can be efficiently produced from a raw material gas containing carbon dioxide. In addition, the reducing agent of the present invention can be used, for example, in a chemical looping method.

DESCRIPTION OF EMBODIMENT

A reducing agent and a method for producing a gas of the present invention will be described in detail below based on preferred embodiments.

[Reducing Agent]

The reducing agent of the present invention is used in production of a product gas containing carbon monoxide by bringing the reducing agent into contact with a raw material gas containing carbon dioxide to reduce the carbon dioxide (i.e., used in the method for producing a gas of the present invention). In addition, the reducing agent can be reduced (regenerated) by bringing the oxidized reducing agent into contact with a reducing gas.
At this time, preferably, the raw material gas and the reducing gas are alternately passed through a reaction tube (reaction vessel) packed with the reducing agent of the present invention such that the conversion of carbon dioxide to carbon monoxide by the reducing agent and the regeneration of the reducing agent in the oxidized state by the reducing gas are performed.

The reducing agent of the present invention contains an oxygen carrier and a basic oxide supported on the oxygen carrier.

Here, the oxygen carrier refers to a compound that has oxygen ionic conductivity and can create reversible oxygen deficiency. The compound itself becomes deficient in an oxygen element by reduction, and, while the compound is in an oxygen element deficient state (reduced state), upon contact with carbon dioxide, the compound exhibits an effect of abstraction of an oxygen element from carbon dioxide and reduction of carbon dioxide.

On the other hand, the basic oxide is a compound having a property of adsorbing carbon dioxide.

The basic oxide is thus supported on the oxygen carrier, and thus carbon dioxide can be converted (reduced) efficiently to carbon monoxide even at a relatively low temperature, the activity of the oxygen carrier can be maintained superbly even with repeated use, and the service life of the reducing agent can be extended.

The reason why the above effects are obtained is uncertain but is presumed as follows. That is, the basic oxide adsorbs carbon dioxide, and carbon dioxide is accumulated on the surface of the oxygen carrier. It is surmised that the accumulated carbon dioxide diffuses over the surface of the oxygen carrier by what is called a surface migration phenomenon and thus good conversion efficiency of carbon dioxide to carbon monoxide can be achieved. Especially in the chemical loop reaction, the reducing agent is brought into contact with a gas containing a large amount of carbon dioxide as a reaction gas, and thus the effect of carbon dioxide adsorption to the oxygen carrier greatly affects the reaction efficiency. Here, the basic oxide may be present in granular form on the surface of the oxygen carrier or may be present in layered form to cover at least a portion of the surface of the oxygen carrier.

In addition, repeated use of the reducing agent, for example, in a chemical looping process causes the oxygen carrier to undergo repeated deformation through its expansion and contraction, but the basic oxide may supposedly mitigate the degree of deformation and suppress the breakage of the oxygen carrier. It is surmised that the process above may be a factor in superb maintenance of the reducing agent activity even after the repeated use.

[[Oxygen Carrier]]

The oxygen carrier is any compound that can cause reversible oxygen deficiency and is not particularly limited, but is preferably a metal oxide represented by a general formula: $M1O_y$.

In the above general formula: $M1O_y$, M1 represents at least one of metal elements belonging to groups 2 to 13 of the periodic table, and y represents a positive real number.

Here, y is preferably from 0.5 to 6, more preferably from 1 to 5, and even more preferably from 1 to 4.

The compound represented by the general formula: $M1O_y$ can form a compound represented by a general formula: $M1O_{y-n}$ by reduction using the reducing gas. In the general formula: $M1O_{y-n}$, M1 and y are the same as those in the general formula: $M1O_y$, and n is a positive real number.

In addition, n is typically a value smaller than y, preferably from 0.05 to 5, more preferably from 0.1 to 3, and even more preferably from 0.15 to 2.

The compound represented by the general formula: $M1O_y$ is reduced through the contact with the reducing gas and converted to the general formula: $M1O_{y-n}$. The compound represented by the general formula: $M1O_{y-n}$ is oxidized by contact with the raw material gas containing carbon dioxide and is converted to the general formula: $M1O_y$. This enables the reducing agent to be used in a cycle of the reduction reaction of carbon dioxide and the reduction reaction of the reducing agent.

The oxygen carrier is, as described above, any compound that is reduced from $M1O_y$ to $M1O_{y-n}$ and oxidized from $M1O_{y-n}$ to $M1O_y$ and is not particularly limited. The compound that can be thus oxidized and reduced can be used in a system involving reduction reaction of carbon dioxide, such as a chemical looping method.

The metal element M1 contained in the oxygen carrier is an element having a plurality of oxidation concept states. Here, the "metal element having a plurality of oxidation concept states" means a metal element that can take a plurality of valences, for example, such as $Fe^{+2}$ and $Fe^{+3}$ in the case of iron (Fe).

Examples of the metal element M1 contained in the oxygen carrier include metal elements belonging to groups 3 to 12 of the periodic table. The metal element M1 is preferably at least one selected from the group consisting of vanadium (V), iron (Fe), titanium (Ti), molybdenum (Mo), yttrium (Y), chromium (Cr), lanthanum (La), nickel (Ni), copper (Cu), tungsten (W), niobium (Nb), and cerium (Ce). Among these, the metal element M1 is preferably cerium, chromium, iron, or the like. Using the oxygen carrier having such a metal element M1 further increases the conversion efficiency of carbon dioxide to carbon monoxide and facilitates the reaction even at a relatively low temperature.

The oxygen carrier may be amorphous or may have crystallinity. In addition, the crystal formed by the oxygen carrier may have any structure.

[[Basic Oxide]]

The basic oxide is an oxide of a metal element (metal oxide) which reacts with water to produce a base or react with an acid to produce a salt. Among these, the basic oxide is suitably a metal oxide having a property of adsorbing carbon dioxide. Note that the basic oxide is a compound different from the oxygen carrier.

The basic oxide may chemically adsorb carbon dioxide or may physically adsorb carbon dioxide.

Here, the basic oxide that chemically adsorbs carbon dioxide means a metal oxide that reacts with carbon dioxide to capture carbon dioxide in the molecule. In addition, the basic oxide that physically adsorbs carbon dioxide means a metal oxide that captures carbon dioxide via van der Waals forces or the like without undergoing chemical reaction.

Among these, the basic oxide is preferably a metal oxide chemically adsorbing carbon dioxide.

Examples of the metal element contained in the basic oxide include metal elements belonging to groups 1, 2, 7, or 9 of the periodic table. The metal element is preferably at least one selected from the group consisting of lithium (Li), sodium (Na), potassium (K), magnesium (Mg), manganese (Mn), cobalt (Co), strontium (Sr), and rubidium (Rb), and more preferably at least one selected from lithium, magnesium, manganese, and strontium. These basic oxides have excellent adsorption capacity for carbon dioxide and thus are preferred.

The reaction of the basic oxide adsorbing carbon dioxide is an exothermic reaction. Thus, the basic oxide generates heat by adsorbing carbon dioxide and thus facilitates the promotion of the reduction reaction of carbon dioxide to carbon monoxide by the oxygen carrier.

The reducing agent is preferably used in the reduction reaction of carbon dioxide requiring a reaction temperature not lower than the temperature at which its equilibrium reaction starts (hereinafter also described as the "equilibrium reaction starting temperature"). The equilibrium reaction starting temperature means a temperature at which the adsorption reaction, which is the equilibrium reaction, starts when the basic oxide reacts with and adsorbs carbon dioxide. For example, when the basic oxide is magnesium oxide (MgO), the equilibrium reaction starting temperature is approximately 250°C under 1 atm.

With the reaction temperature not lower than the equilibrium reaction starting temperature, the surface migration phenomenon facilitates the supply of carbon dioxide to the oxygen carrier, and the conversion (reduction) of carbon dioxide to carbon monoxide is more appropriately performed. The equilibrium reaction of the basic oxide can be referred to Energy & Fuels 2007, 21, 426-434 "Screening of $CO_2$ Adsorbing Materials for Zero Emission Power Generation Systems" and the like.

In addition, the oxygen carrier supports the basic oxide, and thus the activity of the reducing agent is improved as well as stabilization of the reducing agent is promoted. This is considered to be due to an increase in adsorption capacity for carbon dioxide by the basic oxide.

For example, when a metal element (alkali metal element or alkaline earth metal element) is added (doped) to the oxygen carrier, the oxide (basic oxide) of the metal element is more likely to be present on the surface of the oxygen carrier in a large amount.

Here, the decomposition of carbon dioxide on the oxygen carrier can be indicated by a cation redox mechanism composed of three stages: activation of carbon dioxide (division of the OC-O bond and formation of surface oxygen); diffusion of the surface oxygen; and formation of the metal-oxygen-metal bond.

All of these stages proceed through a redox reaction and thus strongly rely on the electronic properties of the surface of the oxygen carrier. When the oxygen carrier incorporates a small amount of metal element in its interior and on its surface, the surface migration rates of the oxygen element in the interior and on the surface of the oxygen carrier are increased.

The present inventors believe that the addition of the metal element reduces a work function at the surface of the oxygen carrier. This effect is induced by surface ionization of the basic oxide on the surface of the oxygen carrier, and causes formation of a diffuse surface dipole, as well as a change in electron density to the oxygen carrier.

Thus, the decrease in the work function at the surface of the oxygen carrier promotes the conversion of carbon dioxide to carbon monoxide in addition to the strong adsorption of carbon dioxide on the surface of the oxygen carrier.

On the other hand, addition of an excess amount of metal element is likely to inhibit the reduction of carbon dioxide (i.e., conversion to carbon monoxide) for the following four reasons:

1. steric effect due to blocking of the reduction active sites on the surface of the oxygen carriers by the added metal ions,
2. in addition to the release of water and carbon monoxide, electronic effect of the added metal ion adversely affecting the adsorption of hydrogen and carbon dioxide,
3. high basicity of the surface of the oxygen carrier, which reduces reaction selectivity in the reaction from carbon dioxide to carbon monoxide and increases reaction selectivity for C3, C4, and C5 hydrocarbons, and
4. formation of a phase-separated metal oxide due to promoted aggregation of an active metal element (Fe in the case of spinel) in the oxygen carrier.

In the present invention, the basic oxide exhibiting the properties as described above is preferably selected and used in an amount in an appropriate range in the reducing agent.

Thus, it goes without saying that the basic oxide that can be used in the present invention is not limited to the basic oxides exemplified above.

From description as above, an amount of the basic oxide is preferably 60 parts by mass or less, more preferably 50 parts by mass or less, even more preferably 35 parts by mass or less, particularly preferably 20 parts by mass or less, and most preferably from 1 to 10 parts by mass, per 100 parts by mass of the reducing agent. When the quantitative relationship between the oxygen carrier and the basic oxide is set in the above range, the adsorption amount of carbon dioxide by the basic oxide falls within an appropriate range, and the conversion of carbon dioxide to carbon monoxide by the oxygen carrier proceeds readily.

[[Composite Metal Oxide]]

In the reducing agent of the present invention, the oxygen carrier preferably further supports a composite metal oxide having a function of moving (migrating) oxygen deficiency more efficiently and retaining the oxygen deficiency in the oxygen carrier, the oxygen deficiency being created by the composite metal oxide interacting with the oxygen carrier and thereby subtracting an oxygen element from the oxygen carrier. In addition, the composite metal oxide itself is not involved, or only partially involved, in the reaction, and thus preferably has a function as a structure holder of the reducing agent as well. This can further increase the conversion efficiency.

The composite metal oxide is preferably a compound represented by a general formula: $Ce_{1-x}(M)_xO_y$. In the composite metal oxide, metal elements constituting the composite metal oxide are compounded, and thus they are arranged close to each other. Therefore, the composite metal oxide efficiently interacts with the oxygen carrier and thus has an excellent oxygen deficiency migration effect in the oxygen carrier. In contrast, in a mixture of single metal oxides, their particles are in contact with each other only in the vicinity of the surface, and the oxygen deficiency migration effect may not be enhanced to an expected level. Note that the composite metal oxide is a compound different from the oxygen carrier and the basic oxide.

In the above general formula: $Ce_{1-x}(M)_xO_y$, M is a metal element that can have a valence number of 3 or 4, and the ionic radius is smaller than the ionic radius of Ce with an identical valence number and an identical coordination number.

In such a composite metal oxide, a difference between the ionic radius of Ce and the ionic radius of the metal element M is preferably greater than 0 pm and 47 pm or less when the valence number is 3 and the coordination number is 6, and greater than 0 pm and 24 pm or less when the valence number is 4 and the coordination number is 8.

For example, the ionic radius of $Ce^{+4}$ is 97 pm when the coordination number of each metal element is 8, and thus the metal element M is preferably a metal element, the tetravalent ion ($M^{+4}$) of which has an ionic radius of 73 pm or greater and less than 97 pm. In addition, the ionic radius of $Ce^{+3}$ is 101 pm when the coordination number of each metal element is 6, and thus the metal element M is preferably a metal element, the trivalent ion ($M^{+3}$) of which has an ionic radius of 54 pm or greater and less than 101 pm.

The composite metal oxide represented by the general formula: $Ce_{1-x}(M)_xO_y$ contains the metal element M that satisfies the above conditions, and thus distortion is generated in the lattice deficiency and, to compensate for the distortion, the interaction force with the oxygen carrier increases. Thus, this facilitates smooth migration of the oxygen deficiency in the oxygen carrier.

In addition, the single metal oxide or its mixture is likely to adsorb an impurity present in the raw material gas or reducing gas, and this tends to decrease the stability. In contrast, the composite metal oxide is less likely to adsorb an impurity and can maintain the oxygen deficiency migration ability over a long period of time. As a result, this can increase the conversion efficiency of carbon dioxide to carbon monoxide by the reducing agent.

Here, x is a positive real number and is preferably from 0.2 to 0.8 and more preferably from 0.3 to 0.7. In this case, the degree of distortion in the lattice deficiency of the composite metal oxide is likely to be moderate.

In addition, y is a real number from 1 to 4, preferably a real number from 1 to 3, and more preferably a real number from 1 to 2. In this case, the stability of the composite metal oxide is likely to improve.

The difference between the ionic radius of Ce and the ionic radius of the metal element M is preferably greater than 0 pm and 47 pm or less when each metal element has a valence number of 3 and a coordination number of 6, and greater than 0 pm and 24 pm or less when each metal element has a valence number of 4 and a coordination number of 8. In both cases, the difference is more preferably greater than 0 pm and 20 pm or less, even more preferably greater than 0 pm and 15 pm or less, and particularly preferably greater than 1 pm and 8 pm or less. With this configuration, the difference between the ionic radius of Ce and the ionic radius of the metal element M is not too large, thus the release of the metal element M from the composite metal oxide can be prevented, and moderate distortion can be generated in the lattice deficiency of the composite metal oxide.

Examples of such a metal element M include samarium (Sm), zirconium (Zr), hafnium (Hf), yttrium (Y), gadolinium (Gd), niobium (Nb), praseodymium (Pr), lanthanum (La), titanium (Ti), indium (In), neodymium (Nd), and scandium (Sc). Among these, the metal element M is preferably at least one selected from the group consisting of samarium (Sm), zirconium (Zr), and hafnium (Hf), and more preferably samarium. Using the above metal as the metal element M can sufficiently accelerate the migration of oxygen deficiency and thus can significantly increase the conversion efficiency of carbon dioxide to carbon monoxide by the reducing agent.

The ionic radius of each metal ion is 84 pm for $Zr^{+4}$ with a coordination number of 8, 83 pm for $Hf^{+4}$ with a coordination number of 8, 79 pm for $Nb^{+4}$ with a coordination number of 8, 74 pm for $Ti^{+4}$ with a coordination number of 8, 95.8 pm for $Sm^{+3}$ with a coordination number of 6, 90 pm for $Y^{+3}$ with a coordination number of 6, 93.8 pm for $Gd^{+3}$ with a coordination number of 6, 99 pm for $Pr^{3+}$ with a coordination number of 6, 80 pm for $In^{3+}$ with a coordination number of 6, 98.3 pm for $Nd^{+3}$ with a coordination number of 6, and 74.5 pm for $Sc^{3+}$ with a coordination number of 6.

In the oxygen carrier supporting the composite metal oxide, an amount of the composite metal oxide is preferably 50 parts by mass or less, more preferably 40 parts by mass or less, even more preferably 30 parts by mass or less, and particularly preferably from 10 to 25 parts by mass, per 100 parts by mass of the reducing agent. When the quantitative relationship between the oxygen carrier and the composite metal oxide is in the above range, the conversion of carbon dioxide to carbon monoxide by the oxygen carrier is allowed to proceed and the migration of oxygen deficiency in the oxygen carrier by the composite metal oxide is promoted. Thus, the reducing agent can further increase the conversion efficiency of carbon dioxide to carbon monoxide.

A packing density of the reducing agent is preferably 1.1 g/mL or less, more preferably from 0.4 to 1 g/mL, and even more preferably from 0.5 to 0.9 g/mL. When the packing density is too small, this would increase the rate of the gas passage too much and reduce the time of contact of the reducing agent with the raw material gas and the reducing gas. As a result, this is likely to reduce the conversion efficiency of carbon dioxide to carbon monoxide by the reducing agent and the regeneration efficiency of the reducing agent in an oxidized state by the reducing gas. On the other hand, when the packing density is too high, this would reduce the rate of the gas passage too much, making it difficult for the reaction to proceed or requiring a longer time to produce the product gas.

A pore volume of the reducing agent is preferably $0.4 \ cm^3/g$ or greater, more preferably from 1 to 30 $cm^3/g$, and even more preferably from 5 to 20 $cm^3/g$. When the pore volume is too small, this would make it difficult for the raw material gas and the reducing gas to enter the inside of the reducing agent. As a result, a contact area of the reducing agent with the raw material gas and the reducing gas would be reduced, which is likely to reduce the conversion efficiency of carbon dioxide to carbon monoxide by the reducing agent and the regeneration efficiency of the reducing agent in an oxidized state by the reducing gas. On the other hand, even if the pore volume is increased beyond the upper limit, no further effect enhancement can be expected, and the mechanical strength would decrease depending on the type of reducing agent.

A form of the reducing agent is not particularly limited but is preferably, for example, granular. When the reducing agent is in the granular form, the packing density of the reducing agent is easily adjusted to the above range.

Here, the granular form is a concept encompassing powdery, particulate, lump, and pelleted forms, and its shape may be any of spherical, plate-like, polygonal, crushed, columnar, needle-like, scaly shapes, and the like.

An average particle size of the reducing agent is preferably from 1 $\mu$m to 5 mm, more preferably from 10 $\mu$m to 1 mm, and even more preferably from 20 $\mu$m to 0.5 mm. The reducing agent with such an average particle size is likely to have the packing density in the above range.

In the present specification, the average particle size means an average value of the particle sizes of any 200 particles of the reducing agent in one field of view observed with an electron microscope. Here, the "particle size" means the maximum length of distances between two points on an outline of the reducing agent. When the reducing agent is columnar, the maximum length of distances between two points on the outline of its end face is taken as the "particle size". In addition, when the reducing agent is in a shape of lump or the like and is an aggregate of the primary particles, for example, the average particle size means the average particle size of the secondary particles.

A BET specific surface area of the reducing agent is preferably from 1 to 500 $m^2/g$, more preferably from 3 to 450 $m^2/g$, and even more preferably from 5 to 400 $m^2/g$. The reducing agent with a BET specific surface area within the above range facilitates the improvement of the conversion efficiency of carbon dioxide to carbon monoxide by the reducing agent.

In addition, in the present invention, the composite metal oxide can promote the migration of oxygen deficiency in the oxygen carrier and thus can maintain the oxygen capacity of the reducing agent at a high level in a wide range of temperatures (from a low temperature of approximately 400°C to a high temperature of approximately 650°C). That is, the reducing agent can efficiently convert carbon dioxide to carbon monoxide in a wide temperature range.

The oxygen capacity of the reducing agent at 400°C is preferably from 1 to 40 mass% and more preferably from 2 to 30 mass%. When the oxygen capacity of the reducing agent at a low temperature is in the above range, it means that the oxygen capacity is sufficiently high also at the temperature during the actual operation (approximately 650°C), and the reducing agent is believed to have an extremely high conversion efficiency of carbon dioxide to carbon monoxide.

[Method for Producing Reducing Agent]

Next, a method for producing the reducing agent will be described.

The reducing agent formed by supporting the basic oxide (the composite metal oxide as necessary) on the oxygen carrier can be produced as follows. First, salts of the metal elements constituting the oxygen carrier and the basic oxide, and optional salts of the metal elements constituting the composite metal oxide are dissolved in an acidic water to prepare an aqueous solution. The aqueous solution is then allowed to gel, then dried and fired. That is, the reducing agent of the present invention can be easily and reliably produced by what is called a sol-gel method.

Examples of an acid used to prepare the acidic water include citric acid, acetic acid, malic acid, tartaric acid, hydrochloric acid, nitric acid, or a mixture of these.

Examples of the salt of the metal element include nitrates, sulfates, chlorides, hydroxides, carbonates, or complexes of these, but among these, the salt of the metal element is preferably a nitrate. In addition, for the salt of the metal element, a hydrate may be used as necessary.

The gel should be dried preferably at a temperature of 20 to 200°C and more preferably at a temperature of 50 to 150°C, and preferably for a time duration of 0.5 to 20 hours and more preferably for a time duration of 1 to 15 hours. Drying as described above can uniformly dry the gel.

The gel should be fired preferably at a temperature of 300 to 1200°C and more preferably at a temperature of 350 to 800°C, and preferably for a time duration of 1 to 24 hours and more preferably for a time duration of 1.5 to 20 hours. The gel is preferably formed into an oxide by firing but can be easily converted to the oxygen carrier, the basic oxide, and the composite metal oxide by firing under the above firing conditions. In addition, firing under the firing conditions above can also prevent excessive particle growth of the reducing agent.

The temperature should be increased at a temperature increase rate of 1 to 20°C/min and preferably at a temperature increase rate of 2 to 10°C/min until the above firing temperature is reached. This promotes the growth of the particles of the reducing agent and can avoid cracking of the crystal (particles).

At this time, when the amount of the salt of the metal element constituting the oxygen carrier is sufficiently greater than the amounts of the salts of the metal elements constituting the basic oxide and the composite metal oxide, the oxygen carrier is formed as a core, and the basic oxide and the composite metal oxide supported on the core is formed. In this case, the basic oxide and the composite metal oxide are believed to cover the periphery of the oxygen carrier (core part) or be distributed in granular form dispersedly on the periphery of the oxygen carrier (core part) and form a surface layer (shell part).

[Method for Using Reducing Agent]

The reducing agent of the present invention can be used, for example, in a chemical looping method as described above. In addition, the reducing agent of the present invention can be used in applications of reducing carbon dioxide as described above.

More specifically, both the reduction reaction of carbon dioxide and the reduction reaction of the reducing agent are desirably performed, and the reducing agent is preferably used in a cycle between the reduction reaction of carbon dioxide and the reduction reaction of the reducing agent. In the reduction reaction of the reducing agent, another reducing agent (reducing gas) is used.

In addition, the reducing agent of the present invention is preferably used in what is called reverse water-gas shift reaction. The reverse water-gas shift reaction is a reaction that produces carbon monoxide and water from carbon dioxide and hydrogen. When a chemical looping method is employed, the reverse water-gas shift reaction is divided into the reduction reaction of the reducing agent (first process) and the reduction reaction of carbon dioxide (second process); the reduction reaction of the reducing agent is a reaction represented by Scheme (A) below, and the reduction reaction of carbon dioxide is a reaction represented by Scheme (B) below.

$$H_2 \text{ (gas)} + M1O_y \text{ (solid)} \rightarrow H_2O \text{ (gas)} + M1O_{y-n} \text{ (solid)} \qquad \text{(A)}$$

$$CO_2 \text{ (gas)} + M1O_{y-n} \text{ (solid)} \rightarrow CO \text{ (gas)} + M1O_y \text{ (solid)} \qquad \text{(B)}$$

where in Schemes (A) and (B), M1, y, and n are each the same as those described above.

That is, in the reduction reaction of the reducing agent, hydrogen, a kind of reducing gas, is oxidized to form water. In addition, in the reduction reaction of carbon dioxide, carbon dioxide is reduced to form carbon monoxide.

A reaction temperature in the reduction reaction of the reducing agent is any temperature at which the reduction reaction can proceed but is preferably 300°C or higher, more preferably 400°C or higher, even more preferably 500°C or higher, and particularly preferably 550°C or higher. In such a temperature range, the efficient reduction reaction of the reducing agent is allowed to proceed.

An upper limit of this reaction temperature is preferably 850°C or lower, more preferably 750°C or lower, and even more preferably 700°C or lower. Setting the upper limit of the reaction temperature to the above range can improve the economic efficiency.

In addition, a reaction temperature in the reduction reaction of carbon dioxide is preferably 300°C or higher, more preferably 350°C or higher, and even more preferably 400°C or higher. In such a temperature range, the efficient reduction reaction of carbon dioxide can be allowed to proceed.

When the reducing agent contains the basic oxide, the reaction temperature is preferably set to be not lower than the equilibrium reaction starting temperature of the basic oxide as described above.

An upper limit of this reaction temperature is preferably 1000°C or lower, more preferably 850°C or lower, even more preferably 700°C or lower, and particularly preferably 650°C or lower. The reducing agent enables the reduction reaction of carbon dioxide to carbon monoxide to proceed with high efficiency even at a low temperature, and thus the reduction reaction of carbon dioxide can be set at a relatively low temperature. In addition, setting the upper limit of the reaction temperature to the above range not only facilitates the use of waste heat but also can further improve the economic efficiency.

In the present invention, a reduction product obtained by the reduction reaction of carbon dioxide may be a substance other than carbon monoxide; specifically, examples include methane. The reduction product, such as carbon monoxide, obtained by the above reduction reaction of carbon dioxide is preferably further converted to an organic material or the like by microbial fermentation or the like. Examples of the microbial fermentation include anaerobic fermentation. Examples of the organic material that can be obtained include methanol, ethanol, acetic acid, butanol, derivatives of these, or mixtures of these, and C5 or higher compounds, such as isoprene.

Furthermore, the reduction product, such as carbon monoxide, may be converted by a metal oxide or the like to a C1 to C20 compound including a hydrocarbon or an alcohol, which has been synthesized by petrochemistry in a related art. Specific examples of the compound that can be obtained include methane, ethane, propylene, methanol, ethanol, propanol, acetaldehyde, diethyl ether, acetic acid, butyric acid, diethyl carbonate, and butadiene.

[Properties of Reducing Agent]

The reducing agent of the present invention preferably has properties as described below.

That is, when the reducing agent is packed in a stainless-steel reaction tube to a height of 40 cm, the reaction tube having an inner diameter of 8 mm and being equipped with a pressure gauge in its flow path, and nitrogen gas with a concentration of 100 volume% is passed through the reaction tube at 30 mL/min, the pressure increase in 10 minutes is preferably 0.03 MPaG or less and more preferably 0.01 MPaG or less.

For the reducing agent exhibiting such properties, the packing density and the pore volume are considered to satisfy the ranges described above, and the reducing agent can sufficiently increase the conversion efficiency of carbon dioxide to carbon monoxide.

The reducing agent and the method for producing a gas of the present invention have been described above, but the present invention is not limited to these.

For example, the reducing agent and the method for producing a gas of the present invention may have any other additional configuration for the above embodiments, may be replaced by any configuration exhibiting a similar function, or one or some configurations may be omitted.

EXAMPLES

The present invention will be further specifically described below with reference to examples and comparative examples, but the present invention is not limited to these examples.

Example A1

1. Production of Reducing Agent

First, as precursors of a reducing agent, 36.12 g of iron (III) nitrate nonahydrate (available from FUJIFILM Wako Pure Chemical Corporation, purity: 99.9%), 2.58 g of zirconium (II) oxynitrate dihydrate (available from Kishida Chemical Co., Ltd., purity: 99.0%), 4.20 g of cerium (III) nitrate hexahydrate (available from Sigma-Aldrich Co. LLC, purity: 99.0%), and 0.06 g of magnesium (II) nitrate hexahydrate (available from FUJIFILM Wako Pure Chemical Corporation, purity: 99.5%) were each weighed.

Then, 27.42 g of citric acid (available from FUJIFILM Wako Pure Chemical Corporation, purity: 99.5%) was weighed, dissolved in 200 mL of deionized water, and a citric acid aqueous solution was obtained. The precursors (metal nitrates) were then added to the citric acid aqueous solution at 65°C under stirring.

After a lapse of 30 minutes, 3.78 g of ethylene glycol (available from FUJIFILM Wako Pure Chemical Corporation, purity: 99.5%) was added to the citric acid aqueous solution, and the temperature was increased to 80°C. The molar ratio of metal:citric acid:ethylene glycol was 1:1.2:0.48.

The temperature of 80°C was maintained under continuous stirring until a viscous gel was formed. The gel was then transferred to a drying oven.

The gel was dried at 100°C for 20 hours.

A swollen lump of the produced organic and inorganic compounds was crushed and fired at 750°C for 4 hours at a rate of 3°C/min.

Finally, the fired lump was finely crushed mechanically, and a target reducing agent was obtained. The reducing agent was granular.

2. Identification of Reducing Agent

2-1. Specific Surface Area

The specific surface area of the reducing agent was measured by adsorption/desorption of nitrogen using a Brunauer-Emmett-Teller (BET) Analyzer (BELSORP Mini2).

2-2. X-Ray Diffraction (XRD)

Crystallographic data were collected with a RINT-TTR III diffractometer (CuK$\alpha$ radiation, 50 kV, 300 mA).

The reducing agent immediately after production exhibited diffraction peaks corresponding to $Fe_2O_3$ (33.158, 35.618, 40.858, 49.488, 54.098), MgO (29.24, 42.86, 51.64, 62.38, 78.26), and $Ce_{0.5}Zr_{0.5}O_y$ (29.108, 33.708, 48.508, 57.508) phases.

The diffraction pattern of $Fe_2O_3$ was clearly identified whereas the peak of $CeO_2$ (28.558) was absent, and thus $Ce_{0.5}Zr_{0.5}O_y$ (y is a real number from 1 to 2) was clearly distinguished. However, the diffraction peaks of $Ce_{0.5}Zr_{0.5}O_y$ closely overlapped with other peaks of $CeO_2$ (33.088, 47.478, 56.338).

Thus, the absence of the $CeO_2$ phase was further confirmed using relative intensity ratio calculation of the XRD data. The XRD result showed the presence of Ce in the solid solution of Ce and Zr.

Other individual diffraction peaks of $ZrO_2$ were not confirmed.

The above results revealed that the obtained reducing agent had a structure containing an oxygen carrier represented by $Fe_2O_3$, and a composite metal oxide represented by $Ce_{0.5}Zr_{0.5}O_y$ and MgO (a basic oxide) supported on the oxygen carrier.

The total amount of Fe, Ce, and Zr was made 50 parts by mass per 100 parts by mass of the reducing agent (The same is true in Examples A2 to A5 below).

In addition, the amount of MgO was 1 part by mass per 100 parts by mass of the reducing agent (i.e., the amount of MgO contained in the reducing agent was 1 mass%).

Example A2

A reducing agent was produced in the same manner as in Example A1 except that the amount of MgO contained in the reducing agent was 5 mass%. The reducing agent was granular.

Example A3

A reducing agent was produced in the same manner as in Example A1 except that the amount of MgO contained in the reducing agent was 10 mass%. The reducing agent was granular.

Example A4

A reducing agent was produced in the same manner as in Example A2 except that the basic oxide was changed from MgO to $Li_2ZrO_4$. The reducing agent was granular.

Example A5

A reducing agent was produced in the same manner as in Example A3 except that the basic oxide was changed from MgO to $Li_2ZrO_4$. The reducing agent was granular.

Comparative Example A1

Reducing agents were produced in the same manner as in Example A1 except that a change was made to omit the basic oxide. The reducing agent was granular.

Examples B1 to B3 and Comparative Example B 1

Reducing agents were produced in the same manner as in Examples A1 to A3 and Comparative Example A1 except that the composite metal oxide was omitted and the oxygen carrier was changed from $Fe_2O_3$ to $MgFe_xAl_{2-x}O_4$. Each reducing agent was granular.

Examples B4 to B8

Reducing agents were produced in the same manner as in Example B1 except that the species and the amount of the basic oxide in the reducing agent were changed as listed in Table 1. Each reducing agent was granular.

Example C1 and Comparative Example C1

Reducing agents were produced in the same manner as in Example A1 and Comparative Example A1 except that the composite metal oxide was omitted and the oxygen carrier was changed from $Fe_2O_3$ to $CeO_2$. Each reducing agent was granular.

Example C2

A reducing agent was produced in the same manner as in Example C1 except that the basic oxide was changed from MgO to $Li_2O$. The reducing agent was granular.

Example D1 and Comparative Example D1

Reducing agents were produced in the same manner as in Example C2 and Comparative Example C1 except that the composite metal oxide was omitted and the oxygen carrier was changed from $CeO_2$ to $CeZrO_2$. Each reducing agent was granular.

Example E1

A reducing agent was produced in the same manner as in Example A1 except that the basic oxide contained in the reducing agent was changed from MgO to SrO and the amount of SrO was 50 mass%. The reducing agent was granular.

Example E2

A reducing agent was produced in the same manner as in Example E1 except that cobalt nitrate hexahydrate (available from FUJIFILM Wako Pure Chemical Corporation, purity: 99.0%) and rubidium nitrate (available from FUJIFILM Wako Pure Chemical Corporation) were used in place of strontium nitrate and the amounts of $Cr_2O_3$ and SrO (basic oxide) contained in the reducing agent were each 1 mass%. The reducing agent was granular.

Example E3

First, as precursors of a reducing agent, 8.08 g of iron (III) nitrate nonahydrate (available from FUJIFILM Wako Pure Chemical Corporation, purity: 99.9%) and 1.44 g of manganese nitrate hexahydrate (available from FUJIFILM Wako Pure Chemical Corporation, purity: 99.0%) were each weighed.
Then, 10.51 g of citric acid (available from FUJIFILM Wako Pure Chemical Corporation, purity: 99.5%) was weighed, dissolved in 60 mL of deionized water, and a citric acid aqueous solution was obtained. The precursors (metal nitrates) were then added to the citric acid aqueous solution at 65°C under stirring.

After a lapse of 30 minutes, 3.41 g of ethylene glycol (available from FUJIFILM Wako Pure Chemical Corporation, purity: 99.5%) was added to the citric acid aqueous solution, and the temperature was increased to 80°C.

The temperature of 80°C was maintained under continuous stirring until a viscous gel was formed. The gel was then transferred to a drying oven.

The gel was dried at 120°C for 5 hours.

A swollen lump of the produced organic and inorganic compounds was crushed and fired at 450°C for 4 hours at a rate of 5°C/min and then further fired at 950°C for 8 hours at a rate of 5°C/min.

Finally, the fired lump was finely crushed mechanically, and a target reducing agent was obtained. The reducing agent was granular.

Comparative Example E1

Iron (III) oxide (available from FUJIFILM Wako Pure Chemical Corporation, purity: 95.0%) was ground with a pestle for 10 minutes, fired at 700°C for 3 hours, and a reducing agent was produced. The reducing agent was granular.

Example F1

First, as precursors of a reducing agent, chromium (III) nitrate nonahydrate (available from FUJIFILM Wako Pure Chemical Corporation, purity: 98.5%) and manganese nitrate hexahydrate (available from FUJIFILM Wako Pure Chemical Corporation, purity: 99.0%) were prepared.

The precursors were then dissolved in distilled water, and a 1 mol/L raw material aqueous solution (solution A) was prepared.

In addition, sodium carbonate was dissolved in distilled water, and a 1 mol/L sodium carbonate aqueous solution (solution B) was prepared.

Solution A and solution B were then simultaneously added dropwise into a vessel containing 20 mL of distilled water at 70°C, and a mixed solution was formed. The dripping rate of solution A was set at 10 mL/min, and the mixed solution was stirred to prevent aggregation of the resulting precipitate.

In addition, the temperature of the mixed solution was maintained at 70°C, and the dripping rate of solution B was also adjusted to control the pH of the mixed solution at 7.0.

Stirring was then continued while the mixed solution was maintained at 70°C, and the mixed solution was aged for 3 hours. After completion of the aging, the precipitate was collected by filtration and washed thoroughly with water.

The collected precipitate was then dried with a dryer at 120°C for 12 hours, then fired at 700°C for 3 hours, and a reducing agent was obtained. The reducing agent was granular. In addition, the amount of $MnO_2$ (a basic oxide) contained in the reducing agent was made 50 mass%.

Comparative Example F1

A reducing agent was produced in the same manner as in Example F1 except that a change was made to omit the basic oxide. The reducing agent was granular.

3. Evaluation of Reducing Agent Characteristics (Conversion Efficiency)

3-1. Evaluation of Characteristics of A to D Series of Reducing Agents

Characteristics of the reducing agent were evaluated by the following procedures using a rapid catalyst screening system ("Single μ-Reactor Rx-3050SR" available from Frontier Laboratories Ltd.) equipped with a microreactor and a gas chromatograph/mass spectrometer (GC/MS) directly connected to the microreactor.

First, 0.2 g of the reducing agent was packed in a quartz reaction tube with an inner diameter of 3 mm and a length of 78 mm. The temperature was then increased at a temperature increase rate of 40°C/min to 650°C while helium gas was fed at a flow rate of 20 mL/min, and the reducing agent was heated for 20 minutes.

Next, hydrogen gas (reducing gas) was passed through the microreactor at a flow rate of 30 mL/min for 20 minutes and thus the reduction reaction of the reducing agent (first process) was performed, and the reducing agent was reduced. At this time, the gas discharged from the outlet of the reactor contained water vapor.

Then, after feeding helium gas was at a flow rate of 20 mL/min for 10 minutes to exchange gas, then carbon dioxide gas was fed at a flow rate of 3 mL/min for 20 minutes, and thus the reduction reaction of carbon dioxide (second process) was performed, and carbon dioxide gas (raw material gas) was reduced. At this time, the product gas discharged from the outlet of the reactor contained carbon monoxide.

Helium gas was then fed at a flow rate of 20 mL/min for 10 minutes to exchange gas.

In the present test, the microreactor was maintained at a temperature of 650°C or 550°C, and was operated under atmospheric pressure conditions.

3-2. Evaluation of Characteristics of E to F Series of Reducing Agents

Characteristics of the reducing agent were evaluated by the following procedures using a rapid catalyst screening system ("Single $\mu$-Reactor Rx-3050SR" available from Frontier Laboratories Ltd.) equipped with a microreactor and a gas chromatograph/mass spectrometer (GC/MS) directly connected to the microreactor.

First, in performing evaluation of characteristics of the oxygen carrier with the microreactor, the following processes were performed to activate the reducing agent. First, 0.2 g of the oxygen carrier was packed in a reaction tube made of quartz with an inner diameter of 3 mm and a length of 78 mm. The temperature was then increased at a temperature increase rate of 40°C/min while helium gas was fed at a flow rate of 20 mL/min, and the oxygen carrier was heated for 20 minutes.

Next, hydrogen gas (reducing gas) was passed through a reaction tube of the microreactor at a flow rate of 5 mL/min for 5 minutes and thus the reduction reaction of the oxygen carrier (first process) was performed, and the reducing agent was reduced. At this time, the gas discharged from the outlet of the microreactor contained water vapor.

Then, after feeding helium gas at a flow rate of 20 mL/min for 5 minutes to exchange gas, carbon dioxide gas was fed at a flow rate of 5 mL/min for 5 minutes, and thus the reduction reaction of carbon dioxide (second process) was performed, and carbon dioxide gas (raw material gas) was reduced. At this time, the product gas discharged from the outlet of the microreactor contained carbon monoxide.

Helium gas was then fed at a flow rate of 20 mL/min for 5 minutes to exchange gas.

Next, for the present test, the following processes were performed. Hydrogen gas (reducing gas) was passed through a reaction tube of the microreactor at a flow rate of 15 mL/min for 5 minutes, and thus the reduction reaction of the reducing agent (first process) was performed, and the oxygen carrier was reduced. At this time, the gas discharged from the outlet of the microreactor contained water vapor.

Then, after feeding helium gas at a flow rate of 20 mL/min for 5 minutes to exchange gas, carbon dioxide gas was fed at a flow rate of 5 mL/min for 5 minutes, and thus the reduction reaction of carbon dioxide (second process) was performed, and carbon dioxide gas (raw material gas) was reduced. At this time, the product gas discharged from the outlet of the microreactor contained carbon monoxide.

In the processes described above, when feeding any of the gases, the temperature of the reducing agent was maintained at 650°C, and the operation was carried out under atmospheric pressure conditions.

The conversion efficiency of carbon dioxide to carbon monoxide by the reducing agent was calculated by the following equation.

Note that the conversion efficiency is an average conversion efficiency per one minute after starting the flow of carbon dioxide gas into the quartz reaction tube.

$$X_{CO} (\%) = n_{CO, \, out}/(n_{CO2, \, in}) \text{ x } 100$$

where in the above equation, n is a mole fraction of carbon dioxide or carbon monoxide in the raw material gas or the product gas.

In addition, the selectivity of the reaction is 100%, and thus

$$\text{total } n_{CO2} = n_{CO2, \, in} + n_{CO, \, out}.$$

Note that, in Table 1, the value of Xco of the reducing agent of each of Examples A1 to A5 is expressed as a relative value ($X_{CO, \, r}$) when the value of Xco of the reducing agent of Comparative Example A1 is set to "1", the value of $X_{CO}$ of the reducing agent of each of Examples B1 to B8 is expressed as a relative value ($X_{CO, \, r}$) when the value of Xco of the reducing agent of Comparative Example B 1 is set to "1", the value of Xco of the reducing agent of Example C1 or C2 is expressed as a relative value ($X_{CO, \, r}$) when the value of Xco of the reducing agent of Comparative Example C1 is set to "1", and the value of Xco of the reducing agent of Example D1 is expressed as a relative value ($X_{CO, \, r}$) when the value of Xco of the reducing agent of Comparative Example D1 is set to "1". In addition, the value of Xco of the reducing agent of each of Examples E1 to E3 is expressed as a relative value ($X_{CO, \, r}$) when the value of Xco of the reducing agent of Comparative Example E1 is set to "1", and the value of Xco of the reducing agent of Example F1 is expressed as a relative value ($X_{CO, \, r}$) when the value of Xco of the reducing agent of Comparative Example F1 is set to "1".

The measurement conditions in the gas chromatograph/mass spectrometer were as follows.

Column temperature: 200°C
Injection temperature: 200°C
Detector temperature: 250°C
Column: EGA Tube (L: 2.5 m, $\varphi$ (inner diameter): 0.15 mm, t: 0 mm)
Column flow rate: 1.00 mL/min
Split ratio: 250
Purge flow rate: 3.0 mL/min

These results are shown in Tables 1 and 2 below.

[Table 1]

TABLE 1

| | Oxygen carrier | Basic oxide | | Composite metal oxide | Conversion efficiency ($X_{CO, r}$) 650°C | Conversion efficiency ($X_{CO, r}$) 550°C |
|---|---|---|---|---|---|---|
| | | Species | Amount in reducing agent [mass%] | Species | | |
| Example A1 | $Fe_2O_3$ | MgO | 1 | $Ce_{0.5}Zr_{0.5}O_y$ | 1.16 | - |
| Example A2 | $Fe_2O_3$ | MgO | 5 | $Ce_{0.5}Zr_{0.5}O_y$ | 1.30 | - |
| Example A3 | $Fe_2O_3$ | MgO | 10 | $Ce_{0.5}Zr_{0.5}O_y$ | 1.18 | - |
| Example A4 | $Fe_2O_3$ | $Li_2ZrO_4$ | 5 | $Ce_{0.5}Zr_{0.5}O_y$ | 1.32 | - |
| Example A5 | $Fe_2O_3$ | $Li_2ZrO_4$ | 10 | $Ce_{0.5}Zr_{0.5}O_y$ | 1.29 | - |
| Comparative Example A1 | $Fe_2O_3$ | - | 0 | $Ce_{0.5}Zr_{0.5}O_y$ | 1.00 | - |
| Example B 1 | $MgFe_xAl_{2-x}O_4$ | MgO | 1 | - | - | - |
| Example B2 | $MgFe_xAl_{2-x}O_4$ | MgO | 5 | - | 1.16 | - |
| Example B3 | $MgFe_xAl_{2-x}O_4$ | MgO | 10 | - | - | - |
| Example B4 | $MgFe_xAl_{2-x}O_4$ | $Li_2O$ | 1 | - | 1.24 | - |
| Example B5 | $MgFe_xAl_{2-x}O_4$ | $Li_2O$ | 5 | - | 1.33 | - |
| Example B6 | $MgFe_xAl_{2-x}O_4$ | $Li_2O$ | 10 | - | 1.20 | - |
| Example B7 | $MgFe_xA_{2-x}O_4$ | $Na_2O$ | 1 | - | 1.13 | - |
| Example B8 | $MgFe_xAl_{2-x}O_4$ | $K_2O$ | 1 | - | 1.08 | - |
| Comparative Example B 1 | $MgFe_xAl_{2-x}O_4$ | - | 0 | - | 1.00 | - |
| Example C1 | $CeO_2$ | MgO | 1 | - | - | - |
| Example C2 | $CeO_2$ | $Li_2O$ | 1 | - | 1.29 | 2.05 |
| Comparative Example C1 | $CeO_2$ | - | 0 | - | 1.00 | 1.00 |
| Example D1 | $CeZrO_2$ | $Li_2O$ | 1 | - | 1.02 | 1.01 |
| Comparative Example D1 | $CeZrO_2$ | - | 0 | - | 1.00 | 1.00 |

[Table 2]

TABLE 2

| | Oxygen carrier | Basic oxide | | | | Composite metal oxide | Conversion efficiency $(X_{CO,r})$ 650°C |
|---|---|---|---|---|---|---|---|
| | | Species 1 | Amount in reducing agent [mass%] | Species 2 | Amount in reducing agent [mass%] | Species | |
| Example E1 | $Fe_2O_3$ | SrO | 50 | - | - | - | 1.26 |
| Example E2 | $Fe_2O_3$ | $Co_2O_3$ | 1 | $Rb_2O$ | 1 | - | 1.02 |
| Example E3 | $Fe_2O_3$ | $MnO_2$ | 12 | - | - | - | 1.38 |
| Comparative Example E1 | $Fe_2O_3$ | - | 0 | - | - | - | 1.00 |
| Example F1 | $Cr_2O_3$ | $MnO_2$ | 50 | - | - | - | 1.03 |
| Comparative Example F1 | $Cr_2O_3$ | - | 0 | - | - | - | 1.00 |

The reducing agent in each example had a high conversion efficiency of carbon dioxide to carbon monoxide. In addition, changing the species and amount of the basic oxide enabled adjustment of the conversion efficiency of carbon dioxide to carbon monoxide.

In contrast, the reducing agent of each comparative example had a low conversion efficiency of carbon dioxide to carbon monoxide. The value of Xco at 650°C was about 1 time that of Comparative Example A1 in Comparative Example B1, about 1.15 times that of Comparative Example A1 in Comparative Example C1, and about 1.39 times that of Comparative Example A1 in Comparative Example D1. In addition, the value of $X_{CO}$ at 650°C was about 2.16 times that of Comparative Example F1 in Comparative Example E1.

## Claims

1. A reducing agent for use in production of a product gas containing carbon monoxide, the reducing agent being brought into contact with a raw material gas containing carbon dioxide to reduce the carbon dioxide to produce the product gas, the reducing agent comprising:

    an oxygen carrier having oxygen ionic conductivity, and
    a basic oxide supported on the oxygen carrier.

2. The reducing agent according to claim 1, wherein an amount of the basic oxide is 60 parts by mass or less per 100 parts by mass of the reducing agent.

3. The reducing agent according to claim 1 or 2, wherein the basic oxide comprises at least one selected from the group consisting of lithium (Li), sodium (Na), potassium (K), magnesium (Mg), manganese (Mn), cobalt (Co), strontium (Sr), and rubidium (Rb).

4. The reducing agent according to any one of claims 1 to 3, wherein the oxygen carrier comprises at least one selected from the group consisting of vanadium (V), iron (Fe), titanium (Ti), molybdenum (Mo), yttrium (Y), chromium (Cr), lanthanum (La), nickel (Ni), copper (Cu), tungsten (W), niobium (Nb), and cerium (Ce).

5. The reducing agent according to any one of claims 1 to 4, further comprising a composite metal oxide represented by $Ce_{1-x}(M)_xO_y$, where M is a metal element with an ionic radius smaller than an ionic radius of Ce with an identical valence number and an identical coordination number, x represents a positive real number, and y represents a real number from 1 to 4, the composite metal oxide being supported by the oxygen carrier.

6. The reducing agent according to claim 5, wherein a difference between the ionic radius of Ce and the ionic radius of the metal element M is greater than 0 pm and 47 pm or less when the valence number is 3 and the coordination number is 6, and greater than 0 pm and 24 pm or less when the valence number is 4 and the coordination number is 8.

7. The reducing agent according to claim 5 or 6, wherein the metal element M is at least one selected from the group consisting of samarium (Sm), zirconium (Zr), and hafnium (Hf).

8. The reducing agent according to any one of claims 1 to 7, wherein the reducing agent is used in production of a product gas containing carbon monoxide, the reducing agent being brought into contact with a raw material gas containing carbon dioxide to reduce the carbon dioxide to produce the product gas.

9. The reducing agent according to any one of claims 1 to 8, wherein the oxidized reducing agent is reduced by being brought into contact with a reducing gas containing hydrogen.

10. The reducing agent according to any one of claims 1 to 9, wherein the reducing agent is used separately in reaction steps of a reduction reaction of carbon dioxide and a reduction reaction of the oxidized reducing agent.

11. A method for producing a gas, the method comprising reducing carbon dioxide by bringing the reducing agent described in any one of claims 1 to 10 into contact with a raw material gas containing the carbon dioxide, to produce a product gas containing carbon monoxide.

## INTERNATIONAL SEARCH REPORT

International application No.

PCT/JP2021/008259

### A. CLASSIFICATION OF SUBJECT MATTER

B01J 23/83(2006.01)i; B01J 23/10(2006.01)i; B01J 23/745(2006.01)i; B01J 23/78(2006.01)i; C01B 32/40(2017.01)i; C01F 17/32(2020.01)i; C01G 49/00(2006.01)i

FI: B01J23/83 M; C01B32/40; B01J23/745 M; B01J23/78 M; B01J23/10 M; C01G49/00 D; C01G49/00 A; C01F17/32

According to International Patent Classification (IPC) or to both national classification and IPC

### B. FIELDS SEARCHED

Minimum documentation searched (classification system followed by classification symbols)
B01J21/00-38/74; C01B32/00-32/991; C01F1/00-17/00; C01G49/00-49/08

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
Scopus; JSTPlus (JDreamIII); JST7580 (JDreamIII); JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2019/230855 A1 (SEKISUI CHEMICAL CO., LTD.) 05 December 2019 (2019-12-05) entire text | 1–11 |
| A | JP 2018-020913 A (THE UNIVERSITY OF TOKYO) 08 February 2018 (2018-02-08) entire text | 1–11 |
| A | WO 2018/222749 A1 (UNIVERSITY OF SOUTH FLORIDA) 06 December 2018 (2018-12-06) entire text | 1–11 |
| A | WENZEL, M. et al., "CO production from C02 via reverse water-gas shift reaction performed in a chemical looping mode: Kinetics on modified iron oxide", J. CO2 Util., 28 November 2016, vol. 17, pp. 60-68, DOI:10.1016/j.jcou2016.10.015, entire text | 1–11 |
| E, X | JP 2021-049489 A (SEKISUI CHEMICAL CO., LTD.) 01 April 2021 (2021-04-01) claims | 1-4, 8-11 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 May 2021 (07.05.2021) | 18 May 2021 (18.05.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application No. |
| --- |
| PCT/JP2021/008259 |

| Patent Documents referred in the Report | Publication Date | Patent Family | Publication Date |
| --- | --- | --- | --- |
| WO 2019/230855 A1 | 05 Dec. 2019 | WO 2019/230853 A1 WO 2019/230854 A1 | |
| JP 2018-020913 A | 08 Feb. 2018 | JP 6204547 B1 | |
| WO 2018/222749 A1 | 06 Dec. 2018 | US 2020/0139351 A1 the whole document | |
| JP 2021-049489 A | 01 Apr. 2021 | (Family: none) | |

Form PCT/ISA/210 (patent family annex) (January 2015)

**EP 4 129 473 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *ASC Omega,* 2018, vol. 3, 4378-4383

- *Energy & Fuels,* 2007, vol. 21, 426-434